# EUROPÄISCHE PATENTANMELDUNG

(11) **EP 0 720 904 A2**
(43) Veröffentlichungstag der Anmeldung: **10.07.1996**
(21) Anmeldenummer: 95119097.4
(22) Anmeldetag: 05.12.1995
(51) Int. Cl.: B29C 47/20, B29C 47/02

(54) **Extruderanlage zur Herstellung von armierten und armierbaren Bauteilen im Extruderverfahren**

(30) Priorität: 07.12.1994 DE 9419574 U
(71) Anmelder: Kakuk, Stefan, 68794 Oberhausen-Rheinhausen (DE)
(72) Erfinder: Kakuk, Stefan, 68794 Oberhausen-Rheinhausen (DE)
(74) Vertreter: Ratzel, Gerhard, Dr.

(57) **Zusammenfassung**

Die vorliegende Erfindung betrifft eine Extruderanlage zur Herstellung von armierten und armierbaren Bauteilen im Extruderverfahren, bei der am Extrudermundstück (2) wenigstens eine Zuführöffnung ausgebildet ist, durch die wenigstens ein Armierungselement (12) von außen während des Extrudiervorgangs in den Materialfluß einführbar, bzw. in das entstehende Bauteil einbettbar ist.

## Beschreibung

Die Erfindung betrifft eine Extruderanlage zur Herstellung von armierten und armierbaren Bauteilen im Extruderverfahren.

Extruderverfahren finden immer mehr Anwendung in verschiedensten Wirtschaftszweigen, wobei häufig Extrudermassen mit eingelagerter Armierung erwünscht sind. Nach dem Stand der Technik besteht diese Armierung in Form von Faserstoffen, die die Extrudermasse durchsetzten. Abgesehen von den hohen Kosten für die Fasern, bereitet solch eine mit Fasern angereicherte Extrudermasse enorme Schwierigkeiten beim Extrudieren. Außerdem wird die gewünschte Biegezugfestigkeit der Bauteile durch die Fasern oft nicht oder nur bedingt erreicht.

Der vorliegenden Erfindung liegt daher die Aufgabe zugrunde, eine Vorrichtung zur Herstellung von armierten und armierbaren Bauteilen im Extruderverfahren zu schaffen, mit der es möglich ist, die verschiedenartigsten Armierungen in extrudierte Bauteile einzubringen.

Diese Aufgabe wird erfindungsgemäß mit einer Extruderanlage der eingangs genannten Art gelöst, indem am Extrudermundstück wenigstens eine Zuführöffnung ausgebildet ist, durch die wenigstens ein Armierungselement von außen während des Extrudiervorgangs in den Materialfluß eingeführt, bzw. in das entstehende Bauteil eingebettet werden kann.

In einer bevorzugten Ausführungsform der erfindungsgemäßen Extruderanlage ist wenigstens eine Zuführöffnung als Öffnungsrohr ausgebildet, das sich in den Innenraum des Extrudermundstücks erstreckt und in Extrudierrichtung umgelenkt ist. Durch eine solche rohrförmige Zuführöffnung bzw. Zuführleitung können fadenförmige Armierungselemente, insbesondere Schnüre, Seile oder Drähte von außen in das entstehende Bauteil eingebracht werden.

In einer anderen, ebenso bevorzugten Ausführungsform ist wenigstens eine Zuführöffnung als Öffnungsschlitz ausgebildet, wobei sich der Schlitz in den Innenraum des Extrudermundstücks erstreckt und in Extrudierrichtung umgelenkt ist. Durch diese schlitzförmige Zuführöffnung können flächige Armierungselemente, beispielsweise Gewebe, Pappen, Lochbänder oder Folien von außen in das entstehende Bauteil eingebracht werden.

Um solche extrudierten Bauteile herzustellen, die nachträglich durch den Einbau von Vorspannelementen vorgespannt werden können, ist erfindungsgemäß eine Extruderanlage vorgesehen, bei der wenigstens eine Zuführöffnung zur Aufnahme eines Bolzens geeignet ist. Der Bolzen ragt in den Innenraum des Extrudermundstücks hinein, ist dort in Extrudierrichtung umgelenkt und erstreckt sich bis zum Mundstückausgang Mit dieser Extruderanlage lassen sich Bauteile herstellen, die zentral oder peripher ― je nach Lage des Bolzens ― kanalförmige Hohlräume aufweisen. In diese Hohlräume können nach Erzeugung des Extrudats passende Vorspannstähle eingeschoben und mittels Spannschrauben bzw. Gewindemuttern gegen eine Druckplatte vorgespannt werden.

Die Erfindung wird im folgenden anhand von in den Zeichnungen dargestellten Ausführungsbeispielen näher erläutert. Es zeigen
- Fig.1:: einen Längsschnitt durch ein Extrudermundstück der erfindungsgemäßen Extruderanlage;
- Fig.2:: einen Querschnitt durch das Extrudat von II nach II in Fig.1;
- Fig.3:: einen Längsschnitt durch das Extrudermundstück einer anderen Ausführungsvariante der erfindungsgemäßen Extruderanlage; und
- Fig.4:: einen Querschnitt durch das Extrudat von IV nach IV in Fig. 3.

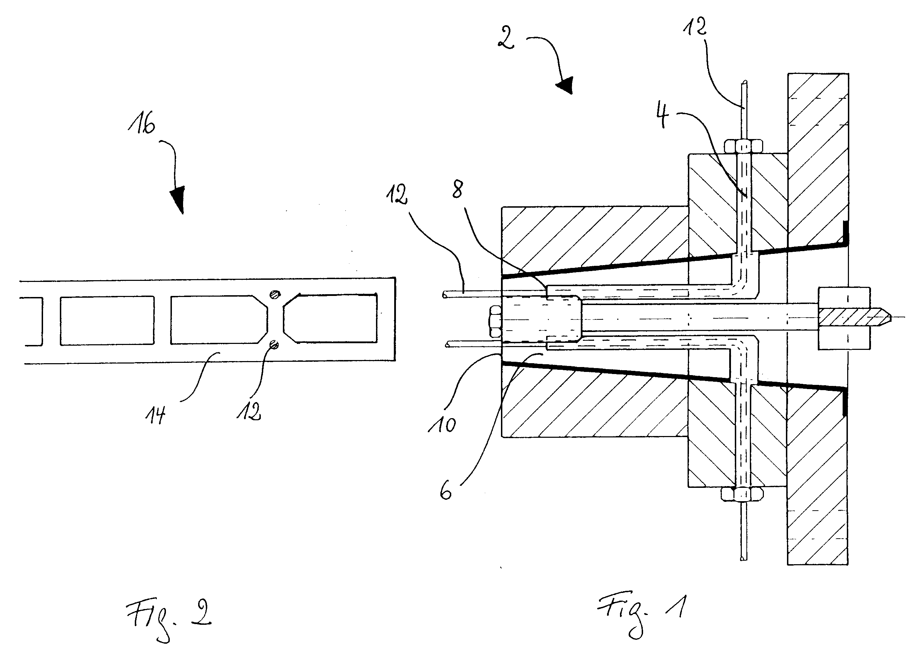

In Fig.1 ist das Extrudermundstück 2 einer erfindungsgemäßen Extruderanlage dargestellt mit zwei Zuführöffnungen, die als Öffnungsrohre 4 ausgebildet sind. Jedes Öffnungsrohr 4 ist in radialer Richtung durch die Wandung des Extrudermundstücks 2 geführt und im Innenraum 6 rechtwinklig in Extrudierrichtung umgebogen. Das jeweilige Rohrende 8 liegt mit Abstand vor dem Mundstückausgang 10. Durch jedes Öffnungsrohr 4 ist ein fadenförmiges Armierungselemente 12 geführt, das in dem Bereich zwischen Rohrende 8 und Mundstückausgang 10 allseitig von Formmasse 14 umgeben ist. Ein mit dieser Extruderanlage hergestelltes armiertes Bauteil 16 ist in Fig.2 im Querschnitt dargestellt. Die fadenförmigen Armierungselemente 12 sind entsprechend der Lage der Öffnungsrohre 4 in der Formmasse 14 ausgerichtet.

Anstelle der in Fig. 1 dargestellten Rohre 4 können ebensogut Bolzen angeordnet sein, die sich allerdings bis an den Mundstückausgang 10 erstrecken. Ein mit diesem Extrudermundstück 2 hergestelltes Bauteil weist an den entsprechenden Stellen kanalförmige Hohlräume auf die im Durchmesser dem Durchmesser der Bolzen entsprechen. In diese Hohlräume können nachträglich Bewehrungsselemente eingeschoben oder eingeschraubt werden. Bei Verwendung von Vorspannstählen oder entsprechenden Rohren können auf diese Weise vorgespannte, im Extruderverfahren hergestellte, armierte Bauteile erzeugt werden.

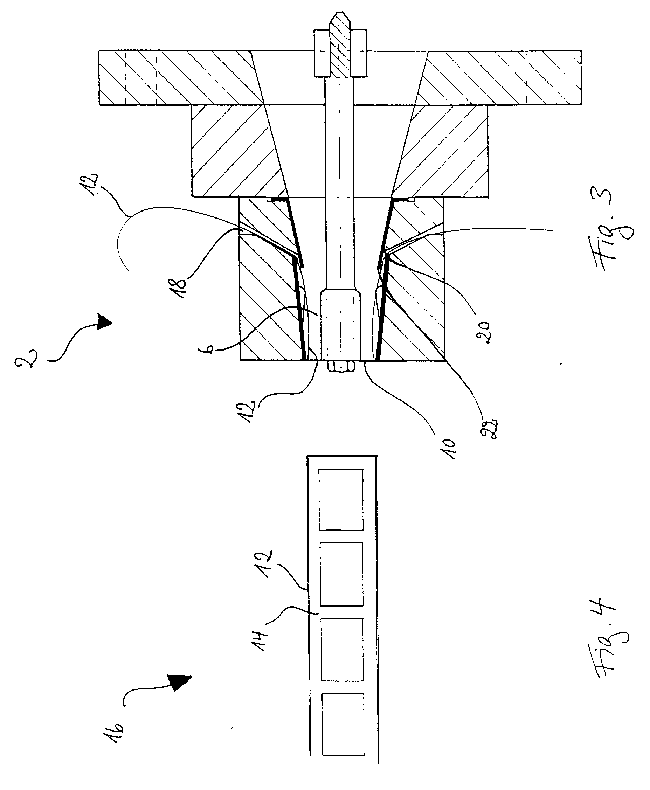

Bei dem in Fig. 3 dargestellten Extrudermundstück 2 einer anderen Variante der erfindungsgemäßen Extruderanlage sind zwei Zuführöffnungen in Form von Öffnungschlitzen 18 ausgebildet. Jeder Öffnungsschlitz 18 erstreckt sich schräg in Richtung Mundstückausgang 10 in den Innenraum 6 des Extrudermundstücks 2. An der Innenwandung ist an der jeweiligen vom Mundstückausgang 10 weiter entfernt liegenden Schlitzkante 20 je ein Führungselement 22 ausgebildet, das eine Umlenkung des flächigen Armierungselements 12 in Richtung Mundstückausgang 10 gewährleistet. Das Führungselement 22 endet mit Abstand vor dem Mundstückausgang 10, so daß in dem dazwischenliegenden Bereich die beiden Armierungselemente 12 beidseitig von Formmasse 14 umgeben sind. Ein mit dieser Extruderanlage hergestelltes armiertes Bauteil 16 ist in Fig. 4 dargestellt. Die flächigen Armierungselemente 12 sind oberseits und unterseits in die Formmasse 14 des Bauteils 16 eingebettet.

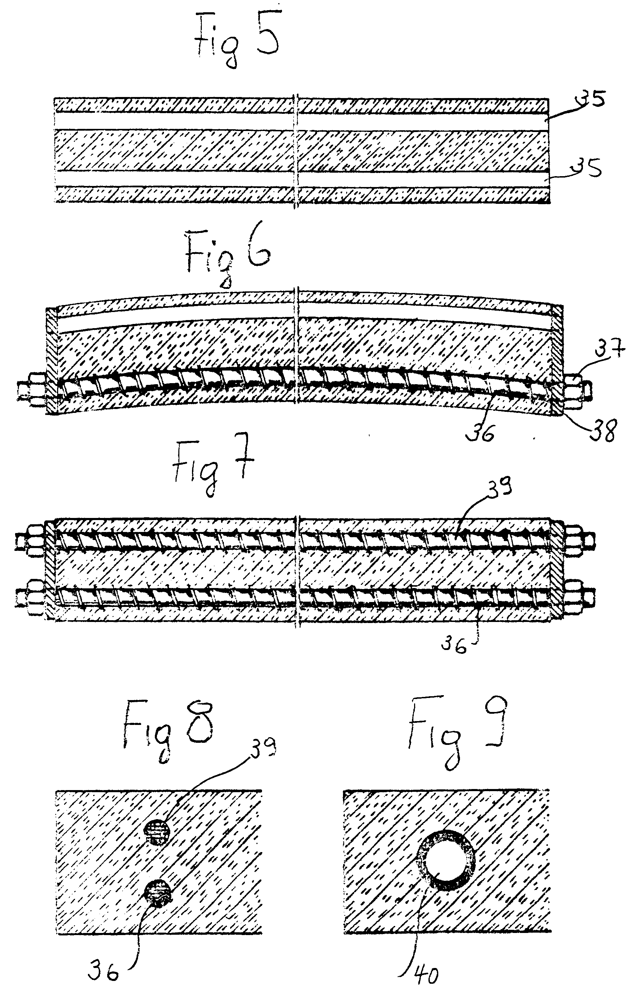

Weitere Ausführungsformen der Erfindung sind im folgenden anhand der Figuren 5 bis 9 beschrieben.

Anstelle der Verwendung von Rohren oder Bolzen bis zum Mundstückausgang um zu bewirken, daß im Material runde Hohlräume oder Kanäle 35 , siehe Figur 5, entstehen, können nachträglich Vorspannstähle 36 oder Rohre 40 (siehe Figur 9) eingeschoben oder eingeschraubt werden, die mittels Spannschrauben bzw. Gewindemuttern 37 gegen die Druckplatte 38 vorgespannt werden.

Dies geschieht im Gegensatz zu den bisher bekannten und praktizierten Vorspannverfahren dadurch, daß die Stähle ein tiefes holzschraubenähnliches und durchgehendes Gewinde aufweisen und durchgehend in den vorzuspannenden, ausgehärteten und trockenen Bauteil eingeschraubt werden. Dadurch entsteht durchgehend durch das vorzuspannende Element im Gewindebereich Spannung und somit Aussteifung bzw. Vorspannung des Elementes.

Das Element bzw. Bauteil, gemäß Figur 5, kann nach Bedarf vor dem Einschrauben der Spannstähle gegen die Zugspannungsrichtung leicht gebogen werden, wie dies in Figur 6 dargestellt ist, damit nach der Rückkehr in die horizontale Stellung eine noch größere Spannung im Gewindebereich entsteht.

Dies kann auch durch Vorspannen des Elements im Druckbereich, also in der oberen Zone, gemäß Figur 7 geschehen, indem durch Vorspannen des oberen Stahles 39, unten Zugspannung und oben Druck entsteht.

Anstatt Gewindespannstähle kann auch das Rohr 40 mit holzschraubenähnlichen außenliegenden Gewinden Anwendung finden.

Vor dem Einschrauben der Spannstähle in die Luftkanäle soll auf das Gewinde sowie am Anfang des Luftkanales ein geeignetes Gleitmittel aufgetragen werden, welches nach der Austrocknung erhärtet und das Material des Elements mit dem Spannstahl verbindet bzw. noch mehr verfestigt.

Die vorliegende Erfindung eröffnet damit neue Produktions- und Einsatzmöglichkeiten von extrudierten Elementen, die trotz niedrigem Gewicht und geringerer Härte, die höchsten Anforderungen im Bezug auf Biegezugfestigkeit in wirtschaftlichster Form erfüllen.

### Bezugszeichen

- 2: Extrudermundstück
- 4: Öffnungsrohr
- 6: Innenraum
- 8: Rohrende
- 10: Mundstückausgang
- 12: Armierungselemente
- 14: Formmasse
- 16: armiertes Bauteil
- 18: Öffnungschlitz
- 20: Schlitzkante
- 22: Führungselement
- 35: Kanäle
- 36: Vorspannstähle
- 37: Gewindemuttern
- 38: Druckplatte
- 39: oberer Vorspannstahl
- 40: Rohr

## Patentansprüche

1. Extruderanlage zur Herstellung von armierten und armierbaren Bauteilen im Extruderverfahren, dadurch gekennzeichnet,
daß am Extrudermundstück (2) wenigstens eine Zuführöffnung ausgebildet ist, durch die wenigstens ein Armierungselement (12) von außen während des Extrudiervorgangs in den Materialfluß einführbar, bzw. in das entstehende Bauteil (16) einbettbar ist.

2. Extruderanlage nach Anspruch 1, dadurch gekennzeichnet,
daß wenigstens eine Zuführöffnung ein Öffnungsrohr (4) ist, das sich in den Innenraum (6) des Extrudermundstücks (2) erstreckt und in Extrudierrichtung umgelenkt ist.

3. Extruderanlage nach Anspruch 1, dadurch gekennzeichnet,
daß wenigstens eine Zuführöffnung ein Öffnungsschlitz (18) ist, der sich in den Innenraum (6) des Extrudermundstücks (2) erstreckt und in Extrudierrichtung umgelenkt ist.

4. Extruderanlage nach einem der Ansprüche 1 bis 3, dadurch gekennzeichnet,
daß wenigstens eine Zuführöffnung zur Aufnahme eines Bolzens geeignet ist, der in den Innenraum (6) des Extrudermundstücks (2) hineinragt und in Extrudierrichtung umgelenkt ist, und der sich bis zum Mundstückausgang (10) erstreckt.

5. Extruderanlage nach Anspruch 1 - 4,
dadurch gekennzeichnet,
daß Bauteile armiert und verspannt werden, die nicht aus Beton bestehen, sondern so beschaffen sind, daß man in das Material des Bauteils in dafür vorgesehene Kanäle, mittels Spannstahl Gewinde einschneiden kann.

6. Extruderanlage nach Anspruch 5,
dadurch gekennzeichnet,
daß die Spannstähle ein. außergewöhnlich tiefes und holzschraubenartiges Gewinde aufweisen.

7. Extruderanlage nach Anspruch 5 - 6,
dadurch gekennzeichnet,
daß anstatt der Spannstähle ein Metallrohr mit durchgehendem, außenliegendem Gewinde angewendet wird.

8. Extruderanlage nach Anspruch 5 - 7,
dadurch gekennzeichnet,
daß die Spannstähle durchgehend durch das vorzuspannende, ausgehärtete und trockenes Bauteil, gegenüber der späteren Zugspannung, eingeschraubt werden kann.

9. Extruderanlage nach Anspruch 5,
dadurch gekennzeichnet,
daß durch Durchbiegung bzw. Spannung des Bauteils gegen die Zugspannungsrichtung und Einschrauben der Spannstähle durchgehend durch das Bauteil Reibungskräfte entstehen, die bei einer Zugbeanspruchung des Bauteils noch stärker wirken und damit eine Vorspannung herstellen.

10. Extruderanlage nach Anspruch 5,
dadurch gekennzeichnet,
daß am Bauteil an beiden Enden Spannglieder aus größtmöglichen Druckplatten und Gewindemuttern angesetzt und im Gegensatz zum Spannbeton nur leicht angezogen werden.

11. Extruderanlage nach Anspruch 5 - 10,
dadurch gekennzeichnet,
daß beim Einschrauben von Spannstählen in die Bohrung bzw. die Kanäle und auf das Gewinde des Spannstahls eine Gleitmasse aufgetragen wird, die das Einschrauben des Spannstahls erleichtert und nach Erhärtung die Festigkeit des in das Material eingeschnittenen Gewindes und die Haftung insgesamt erhöht.

12. Extruderanlage nach Anspruch 5 - 11,
dadurch gekennzeichnet,
daß auch im Druckbereich des Bauteiles zur Aufnahme vom Druck mit gleicher Wirkung Stahlstäbe eingeschraubt werden.
